# EUROPÄISCHE PATENTSCHRIFT

(11) **EP 2 780 256 B1**
(45) Veröffentlichungstag und Bekanntmachung des Hinweises auf die Patenterteilung: **15.03.2017**
(21) Anmeldenummer: 12778078.1
(22) Anmeldetag: 12.10.2012
(51) Int. Cl.: B65D 81/02, C08J 3/20, C08L 97/02, C08L 99/00, C08J 5/04

(54) **BIOKOMPOSIT BZW. BIOWERKSTOFF MIT SONNENBLUMENKERNSCHALEN/-HÜLSEN**
BIOCOMPOSITE AND/OR BIOMATERIAL WITH SUNFLOWER SEED SHELLS/HUSKS
COMPOSITE BIOLOGIQUE OU MATÉRIAU BIOLOGIQUE À BASE DE COQUES/D'ÉCORCES DE GRAINES DE TOURNESOL

(30) Priorität: 14.11.2011 DE 102011086319; 05.06.2012 DE 102012209482
(43) Veröffentlichungstag der Anmeldung: 24.09.2014
(60) Teilanmeldung: 16205995.0
(73) Patentinhaber: SPC Sunflower Plastic Compound GmbH, 49681 Garrel (DE)
(72) Erfinder: WENDELN, Ulrich, 49681 Garrel (DE); MEYER, Ulrich, 49681 Garrel (DE)
(74) Vertreter: Eisenführ Speiser
(86) Internationale Anmeldenummer: PCT/EP2012/070348
(87) Internationale Veröffentlichungsnummer: WO 2013/072146

(56) Entgegenhaltungen:
- EP-A1- 0 976 790
- US-A- 3 927 235
- US-A- 5 663 221
- CÉLINE GENEAU-SBARTAÏ ET AL: "Sunflower Cake as a Natural Composite: Composition and Plastic Properties", JOURNAL OF AGRICULTURAL AND FOOD CHEMISTRY, Bd. 56, Nr. 23, 10. Dezember 2008 (2008-12-10), Seiten 11198-11208, XP055045769, ISSN: 0021-8561, DOI: 10.1021/jf8011536

## Beschreibung

Die Erfindung betrifft ein Biokomposit bzw. ein Biowerkstoff. Solche Biowerkstoffe bzw. Biokomposite sind zum Beispiel schon als "Wood-Plastic-Composites" (kurz "WPC"), also - Holz-Kunststoff-Verbundwerkstoffe bekannt. Diese werden auch "Wood (-fiber) Polymer Composites" genannt oder "Holz-Polymer-Werkstoffe". Bei den vorgenannten Biowerkstoffen handelt es sich um thermoplastisch verarbeitete Verbundwerkstoffe, die aus unterschiedlichen Anteilen von Holz - typischerweise Holzmehl - Kunstoffen und Additiven hergestellt werden. Verarbeitet werden sie meist mit modernen Verfahren der Kunststofftechnik wie Extrusion, Spritzgießen, Rotationsguss oder mittels Presstechniken, aber auch im Thermoformverfahren.

Bei den WPC ist es nicht nur bekannt, Holz (insbesondere Holzmehl) zu verarbeiten, sondern es sind auch andere Pflanzenfasern bekannt, zum Beispiel Kenaf, Jute oder Flachs.

Bei der vorliegenden Erfindung geht es darum, die bisher bekannten WPC, also die bisher bekannten naturfaserverstärkten Kunststoffe, zu verbessern, insbesondere deren Kosten in der Herstellung für die Ausgangsmaterialien zu verringern.

Bei den bisher bekannten WPC liegt der Holzanteil regelmäßig bei über 20%, so sind beispielsweise WPC bekannt, bei denen der Holzfaser- oder -mehlanteil bei 50 bis 90% liegt und diese Materalien in einer Kunststoffmatrix aus Polypropylen (PP) oder weniger häufig aus Polyethylen (PE) eingebettet sind. Aufgrund der thermischen Empfindlichkeit des Holzes sind Verarbeitungstemperaturen nur von unter 200°C möglich. Bei höheren Temperaturen kommt es zu thermischen Umwandlungen und Zersetzungen des Holzes, was insgesamt die Eigenschaften des Werkstoffes in einer ungewünschten Weise verändert.

Bei den bislang bekannten naturfaserverstärkten Kunststoffen werden auch durch Zugabe von Additiven spezielle Materialeigenschaften optimiert. Solche Materialeigenschaften sind zum Beispiel die Bindung zwischen Holz und Kunststoff, Fließfähigkeit, Brandschutz, Farbgestaltung und, besonders für Außenanwendungen, auch die Witterungs-, UV- und Schädlingsbeständigkeit.

Auch ist es bereits bekannt, ein WPC auf Basis eines Gemisches aus Polyvinylchlorid (PVC) und Holzfasern zu je 50% herzustellen. Diese WPC werden auf Basis thermoplastisch verarbeiteter Duroplaste wie modifiziertes Melaminharz ebenfalls in der Entwicklung wie auch die Verarbeitung von holzähnlichen Produkten wie Bambus dann als "Bamboo Plastic Composites" ("BPC") bezeichnet. BPC klassifiziert die WPC-Verbundwerkstoffe, bei denen Holzfasern durch Bambusfasern ersetzt sind.

Die Vorteile der beschriebenen Biowerkstoffe gegenüber traditionellen Holzwerkstoffen wie Spannplatten oder Sperrholz sind die freie, dreidimensionale Formbarkeit des Werkstoffs und die größere Feuchteresistenz. Gegenüber Vollkunststoffen bieten WPC eine höhere Steifigkeit und einen deutlich geringeren thermischen Ausdehnungskoeffizienten. Ein Nachteil der bisherigen Biowerkstoffe besteht auch darin, dass gegenüber Schnittholz deren Bruchfestigkeit vermindert ist, gegenüber massiven Formstücken und gegenüber Schnittholz die Formstücke mit verstärkten Einlagen bruchfester sind. Die Wasseraufnahme von Formstücken ohne abschließende Beschichtung ist höher als bei massiven Formkunststoffteilen oder Formstücken mit Folien- oder Fließbeschichtung.

Der Einsatz von den bisher beschriebenen Biowerkstoffen als Terrassendielen oder zur Herstellung von Platten ist ebenso bekannt wie die Verwendung von WPC vor allem im Baugewerbe, der Automobil- und Möbelindustrie, Außenbereich für Bodenbeläge (Terrassen, Schwimmbäder...), Fassaden und Möbel, insbesondere als Ersatz für Tropenhölzer. Es sind auch mehrere Stuhl- und Regalsysteme aus WPC bekannt. Weitere Anwendungen sind Schreibgeräte, Urnen, Haushaltsgeräte, WPC Biowerkstoffe finden im technischen Bereich als Profile zur elektrischen Isolation Einsatz und in der Automobil-industrie insbesondere als Türinnenverkleidung und Hutablagen.

Aus EP 0976790 ist eine "process for the manufacture of a composite material" bekannt, aus US-A-3,927,235 ist ein "reconstituted board products from plantfiber residues" bekannt, in J. Agric. Food Chem. 2008,56 11198-11208 ist ein "Sunflower Cake as a Natural Composite: Composition Plastic Properties" beschrieben und aus US 5,663, 221 ist ein "Method for the production of MDF Boards based on sunflower seed husk" bekannt.

Aufgabe der Erfindung ist es nun, die bisherigen Biowerkstoffe zu verbessern, insbesondere auch kostengünstiger zu gestalten und ihre Materialeigenschaften zu verbessern.Erfindungsgemäß wird ein Biowerkstoff mit dem Merkmal nach Anspruch 1 vorgeschlagen. Vorteilhafte Weiterbildungen werden in den Unteransprüchen beschrieben.

Erfindungsgemäß wird vorgeschlagen, statt Holz, Bambus oder anderen, holzähnlichen Faserprodukten, Sonnenblumenkernschalen/- hülsen als Ausgangsmaterial für die WPC-Produkte zu verwenden und zur Herstellung solcher Produkte einzusetzen.

Sonnenblumen werden in allen Gegenden dieser Welt angebaut und das Hauptziel der Sonnenblumenproduktion besteht darin, Sonnenblumenkerne und insbesondere deren Inhalte zu gewinnen. Bevor die Kerne verarbeitet werden, muss der Sonnenblumenkern geschält werden, dass heißt, dass der eigentliche Sonnenblumenkern von seiner Schale/ Hülse befreit wird. Diese Schalen/Hülsen fallen in der Sonnenblumenkernproduktion in großen Mengen an und können als quasi Abfallprodukte der Sonnenblumenkernproduktion auch für andere Einsatzzwecke verwendet werden, zum Beispiel als Viehfutter, Biogasanlagen etc..

Der Vorteil der Sonnenblumenkernschalen/- hülsen besteht zunächst einmal darin, dass sie in großen Mengen nicht nur anfallen, sondern dass sie bereits aufgrund ihrer geringen Größe in relativ kleiner Form vorliegen und somit nur noch einer geringen Weiterbearbeitung, zum Beispiel Zerkleinerung, bedürfen, um das Ausgangsprodukt für ein "SPC" ("Sunflower-Plastic-Composite") zu bilden. Mithin ist die Zerkleinerung bzw. Zermahlung der Sonnenblumenkernschalen/- hülsen mit deutlich geringerem Energieaufwand verbunden als die Herstellung von Holzmehl für die WPC-Produktion.

Der besondere Vorteil des Einsatzes und der Verwendung von Sonnenblumenkernschalen besteht auch darin, dass diese überaus geeignet sind, auch für ein SPC Verwendung zu finden, welches zur Herstellung einer Verpackung, zum Beispiel Flasche, Dose, dient, insbesondere einer Nahrungsmittelverpackung.

Vor allem aber hat sich in einem ersten Versuch gezeigt, dass sich verkleinerte bzw. gemahlene Sonnenblumenkernschalen/- hülsen vorzüglich für eine Verarbeitung als SPC eignen und sich damit vorzüglich Nahrungsmittelverpackungen herstellen lassen, die in keiner Weise den Geschmack des aufbewahrten Nahrungsmittels ungünstig oder in irgendeiner Weise verändern.

Somit stellt die Erfindung auch einen sehr nachhaltigen Ansatz dar, ressourcenschonend Verpackungsmaterial oder ähnliches herzustellen.

Die Verarbeitung der zerkleinerten bzw. zermahlenen Sonnenblumenkernhülsen kann vorteilhafterweise folgen wie bei der Herstellung von Wood-Plastic-Composites.

Der Anteil der Sonnenblumenkernhülsen kann dabei 50 bis 90% des Endprodukts betragen, wobei als Kunststoffmatrix besonders bevorzugt ist ein Polypropylenwerkstoff, aber auch ein Polyethylenwerkstoff oder Polyvinylwerkstoff denkbar ist, wobei letztere weniger geeignet erscheinen.

Sonnenblumenkernhülsen (Sonnenblumenschalen) können aufgrund ihrer thermischen Empfindlichkeit durchaus mit Verarbeitungstemperaturen von bis zu 200°C verarbeitet werden, auch Temperaturen von bis zu 210°C bis 240°C, vorzugsweise 230°C, sind möglich, bei höheren Temperaturen könnte es zu thermischen Umwandlungen oder Zersetzungen kommen.

Durch die Zugabe von Additiven werden spezielle Materialeigenschaften optimiert, zum Beispiel die Bindung zwischen den Sonnenblumenkernhälsen und dem Kunststoff, die Fließfähigkeit des Sonnenblumenkernhülsen-/ Kunststoffgemischs, Brandschutz, Farbgestaltung und besonders für Lebensmittelanwendungen die Öl-, UV- und Schädlingsbeständigkeit.

Besonders bevorzugt ist ein Gemisch aus PP (Polypropylen), PE (Polyethylen), ABS (Acrylnitril-Butadien-Styrol)- Kunststoff einerseits und Sonnenblumenkernhülsen andererseits zu je 50%. Bei einem solchen Gemisch wird also einerseits eine Fraktion aus PP und andererseits eine Fraktion aus (gemahlenen) Sonnenblumenkernhülsen (Sonnenblumenschalen) in der gleichen Quantität eingesetzt, wobei die Sonnenblumenschalen die in der vorliegenden Anmeldung beschriebenen Eigenschaften aufweisen hinsichtlich ihrer Korngröße, Wassergehalt, Ölgehalt etc. Statt der beschriebenen Kunststoffe wie PP, PE oder ABS können auch PVC (Polyvinylchlorid) oder PS (Polystyrol) oder PLA (Polylactid) eingesetzt werden. Mitunter ist dann die Verarbeitungstemperatur durch die Kunststoffkomponente bestimmt, wenn deren maximale Verarbeitungstemperatur unterhalb der des Schalenmaterials liegt.

Das erfindungsgemäße Sunflower-Plastic-Composites (SPC) kann dabei durch ein Verfahren bearbeitet werden, welches in der Kunststoffproduktion bereits gut eingeführt ist. Besonders bevorzugt ist die Verarbeitung mittels Spritzguss, aber auch jede andere Kunststoffverarbeitungsform ist ohne Weiteres denkbar und möglich.

Beim Spritzgießen muss das Material, also das Mischmaterial, bestehend aus Kunststoff einerseits und zerkleinerten bzw. zermahlenen Sonnenblumenkernhülsen andererseits homogen und problemfrei dosierbar sein, damit alle Teile der Schmelze eine gute Fließfähigkeit aufweisen.

Deshalb ist eine Korngröße des Sonnenblumenkernhülsenmaterials zwischen 0,01 bis 0,5 mm, besonders bevorzugt ist eine Korngröße von 0,1 bis 0,3 mm, wobei im Bedarfsfall eine solche Korngröße auch erreicht ist, wenn ein überwiegender Teil, z.B. 90% des Hülsenmaterials in dem vorgenannten Bereich liegt und 10 bis 20% außerhalb dieses Bereichs liegt (aufgrund von Toleranzungenauigkeiten).

Bevorzugt hat das Sonnenblumenkernhülsenmaterial einen hohen Trocknungsgrad, d.h. es hat einen Wassergehalt, der zwischen 1 und 9% liegt, vorzugsweise zwischen 4 und 8% liegt.

Das Hülsenmaterial hat einen Fettanteil von maximal 4 % oder darunter. Aufgrund der Sonnenblumenkernhülsengeometrie und der geringen Schlagzähigkeit sind die Wandstärken im Spritzguss dicker ausgelegt als bei reinen Kunststoffgranulaten. Vorteilhaft ist die wesentlich höhere Wärmeformbeständigkeit, die der Masse bei höheren Temperaturen Steifigkeit verleiht. SPC-Formteile können daher bei höheren Temperaturen entformt werden.

Die Erfindung eignet sich insbesondere dafür, ein SPC zur Herstellung einer Verpackung, vorzugsweise einer Nahrungsmittelverpackung, zum Beispiel eine Dose, eine Flasche oder dergleichen, einzusetzen. Eine solche Verpackung kann bedarfsweise noch innen- bzw. außenseitig mit einer Beschichtung versehen werden, um die gesamte Verpackung beständiger zu machen und um etwaige sensorische Beeinflussung des verpackten Materials, zum Beispiel Öl, Getränke etc. durch das Verpackungsmaterial, also das SPC, auszuschließen.

Die Verwendung von Sonnenblumenkernhülsen/Sonnenblumenkernschalen ist in der vorliegenden Anmeldung die bevorzugte Verwendung einer Hülse zur Herstellung eines "Bio-Plastic-Composites".

Statt Sonnenblumenkernhülsen bzw. Schalen von Sonnenblumenkernen lassen sich auch andere Schalen bzw. Hülsen von anderen Früchten erfindungsgemäß verwenden, zum Beispiel von Nüssen (insbesondere Haselnüsse, Walnüsse, Paranüsse, Bucheckern, Eicheln) oder von Getreide, insbesondere Roggen, Weizen, Hafer, Tritikale, Gerste, Mais, Reis, Hirse oder dergleichen.

Wie bereits erwähnt, ist es bei den naturfaserverstärkten Polymeren bereits bekannt, Holz bzw. Holzfasern und dergleichen als Compoundmaterial einzusetzen, um somit ein Holzplastik-Compoundmaterial herzustellen, welches dann später weiterverarbeitet wird. Bei der Weiterverarbeitung wird dabei das Compoundmaterial geschmolzen bzw. in jedem Fall thermisch stark erhitzt, um es fließfähig und somit verarbeitungsfähig zu machen. Bei Erreichen einer Temperatur von 200°C ist dies jedoch bei Wood-Plastic-Composite Materialien sehr problematisch, da die thermische Beanspruchung des Holzes ab dem Bereich der Temperatur ab 200°C zu hoch ist und somit das ganze Material in Mitleidenschaft gezogen wird. Die Polymere also Polymermatrixen wie Polyethylen (PE), Polypropylen (PP), Polystyrol (PS) oder Polyvinylchlorid (PVC) sind jedoch unter anderem wegen ihres Kriechverhaltens und ihrer niedrigen Wärmeformbeständigkeit für die meisten strukturellen Anwendungen nicht geeignet, wenn sie nicht auch bei hohen Temperaturen, nämlich bei Temperaturen deutlich über 200°C verarbeitet werden können, z.B. in Spitzguss oder dergleichen. Tragende Elemente aus Wood-Plastic-Composit Material müssen auch signifikant bessere mechanische Eigenschaften aufweisen als auf PP- oder PE-basierende Wood Plastic Composite (WPC).

Wie erwähnt, ist der Einsatz von Hochleistungskunststoffen als Matrix durch die Vorgabe der Schmelztemperatur (bis 200°C) sehr stark eingegrenzt. Hinzukommt der sehr hohe Preis möglicher technischer Polymere, so dass der wirtschaftlich kaum mehr zu vertreten ist.

Durch Tests konnte nun gefunden werden, dass das erfindungsgemäße SPC Biowerkstoff auch Verarbeitungstemperaturen bis 300°C realisierbar sind, in jedem Fall eine Verarbeitung im Bereich von 220°C bis 250°C keine Materialdegradierung nach sich zieht und somit können auch signifikante Verbesserungen der mechanischen Eigenschaften zu einem akzeptablen Preis angeboten werden.

Das erfindungsgemäße Biowerkstoff bzw. Biocomposite unter Verwendung von Sonnenblumenkernschalen/Hülsen lässt sich vorzüglich einsetzen und anwenden für Kunststoffteile aus dem Automotivebereich, Folien wie auch Tüten, Verpackungen, Industrie- und Konsumgüter, Dielen, Möbel. Für den Automotivebereich kommen beispielsweise die Schalen von Radkästen (sog. Radhausschalen) in Betracht, die Motorabdeckung oder auch die Unterbodenverkleidung. Im Bereich von Folien und Tüten ist besonders die Anwendung des erfindungsgemäßen Biowerkstoffs zur Herstellung von Silofolien, Verpackungsfolien und Tüten zu erwähnen, im Bereich Verpackung und Behälter sind insbesondere erfindungsgemäß die Herstellung von Lebensmittelverpackungen, Mülltonnen oder Kunststoffdosen und entsprechende Behälter zu erwähnen. Als besondere erfindungsgemäße Verwendung des erfindungsgemäßen Biowerkstoffs kommt auch die Herstellung von Getränkekisten, Brotkästen und Pflanztöpfen in Betracht sowie im Haus- und Gartenbereich die Herstellung von Mobiliar, z.B. Stühle, Bänke, Tische wie aber auch Terrassendielen und Türen.

Schließlich hat sich gezeigt, dass durch den Blumenanteil des Sonnenblumenkernschalenmaterials einerseits und/oder dessen Korngröße andererseits sich die Schlagzähigkeit des erfindungsgemäßen Biowerkstoffs in eine gewünschte Art und Weise einstellen lassen.

Wie erwähnt, enthält der erfindungsgemäße Biowerkstoff bzw. das erfindungsgemäße Biokomposit Sonnenblumenkernschalen/-hülsen, so dass also der erfindungsgemäße Biowerkstoff bzw. der erfindungsgemäße Biokomposit als Basismaterial Sonnenblumenkernschalen/-hülsen aufweist. Soweit in der vorliegenden Anmeldung von Sonnenblumenkernhülsenmaterial die Rede ist, so ist dies gleichbedeutend mit Sonnenblumenschalen, Sonnenblumenkernschalen, Sonnenblumenhülsen. Stets handelt es sich um das Schalenmaterial von Sonnenblumenkernen.

Soweit das Schalenmaterial nach seiner Loslösung vom Kern, also nach der Schälung, hinsichtlich des Wassergehalts, der Korngröße oder des Fettanteils Parameter aufweist, die von dem abweichen, was gemäß der vorliegenden Anmeldung als besonders vorteilhaft verwendet wird, wird das Material entsprechend behandelt und verarbeitet. Wenn bspw. das Schalenmaterial einen Wassergehalt von 15% aufweist, wird dieser Wassergehalt durch Trocknung gezielt auf den gewünschten Wert reduziert. Weißt das Schalenmaterial nach der Schälung eine Korngröße auf, die zu hoch ist, so wird durch eine weitere Mahlung die gewünschte Korngröße erreicht. Weißt das Schalenmaterial nach der Schälung einen zu hohen Fettanteil auf, so wird durch einen üblichen Fettabsorptionsprozess (auch durch thermische Behandlung möglich) der Fettanteil in den Schalen gezielt reduziert.

Nachstehend werden typische Zusammensetzungen eines Biowerkstoffs genannt, die einerseits gewünschte technische Eigenschaften erfüllen und anderseits deutlich günstiger sind als bisherige Kunststoffe bzw. Biokunststoffe.

### 1. Ausführungsbeispiel: Biokunststoff "ABS 300"

520 kg PP (Polypropylen), 300 kg Schalen, 30 kg Additiv (Geruch), 30 kg Additiv (Schlagzähigkeit), 30 kg Additiv (Feuchtigkeit), 30 kg Additiv (Fließeigenschaft), 30 kg Additiv (Haftvermittler), 30 kg Additiv (Schleppmittel).

Eine Mischung aus diesem Material wird dann wie üblich einer Compoundierung zugeführt, so dass dann aus dem compoundierten Material der gewünschte Kunststoff in der gewünschten Form hergestellt werden kann, bspw. Extrusion oder Spritzgießen oder Rotationsguss oder Presstechniken oder Thermoformverfahren.

Als Haftvermittler-Additiv ist bspw. das Produkt "SCONA TPPP 8112 FA" (Haftungsmodifikator für Polypropylen-Naturfaser-Compounds und in TPE-S-Compounds) der Firma BYK, Additives & Instruments, Technisches Merkblatt, Stand 07/11, ein Produkt und eine Firma der ALTANA-Gruppe, geeignet.

Als Schleppmittel-Additiv ist das Produkt "BYK-P 4200" (Schleppmittel zur Verringerung von Geruch und VOC-Emissionen in thermoplastischen Compounds), Merkblatt X506, Stand 03/10, der Firma BYK Additives & Instruments, ein Unternehmen der ALTANA-Gruppe, geeignet.

Als Additiv gegen Geruchsbildung erscheint besonders geeignet das Produkt "Ciba IRGANOX 1076" (Phenolic Primary Antioxidant for Processing and Long-Term Thermal Stabilization), ein Produkt der Firma Ciba.

Als weiteres Additiv zur Prozessstabilisierung ist das Produkt "Ciba IRGAFOS 168" (Processing Stabiliser) der Firma Ciba geeignet.

Als Polypropylenmaterial ist besonders geeignet das Produkt "Moplen EP300K - PP - Lyondell Basell Industries".

Eine weitere Zusammensetzung (2. Ausführungsbeispiel) eines anderen Biowerkstoffes mit der internen Bezeichnung "PP 50" setzt sich wie folgt zusammen:
45% PP Moplen EP300K, Gr
50% Sonnenblumenschalen
Irgafos 168, Pu, 0,20%
Irganox 1076, Pu, 0,30%
BYK P 4200, 2,00%
Scona TPPP 8112 FA, Pu, 2,5%

Die vorgenannten Bestandteile werden wie üblich compoundiert und können dann zur Herstelllung des gewünschten Kunststoffprodukts der vorliegenden Anmeldung beschriebenen Verfahren, z.B. Extrusion, Spritzgießen, Tiefziehen, Rotationsguss, Presstechniken, Thermoformverfahren, verarbeitet werden.

Soweit in der vorliegenden Anmeldung von Compoundieren oder von Compoundierung die Rede ist, so ist damit die Kunststoffaufbereitung des erfindungsgemäßen Biowerkstoffes bzw. Biokunststoffes gemeint und das bedeutet konkret, der Veredelungsprozess, welcher durch Beimischung von Zuschlagstoffen (Füllstoffe, Additive etc.) die gezielte Optimierung der Eigenschaftsprofile des erfindungsgemäßen Biowerkstoffes beschreibt. Die Compoundierung erfolgt z.B. in einem Extruder (z.B. einem Doppelschneckenextruder, ist aber auch möglich mit einem gegenläufigen Doppelschneckenextruder sowie durch Planetwalzenextruder und Ko-Kneter) und umfasst u.a. die Verfahrensoperationen Fördern, Aufschmelzen, Dispergieren, Mischen, Entgasen und Druckaufbau.

Der Zweck des Compoundierens ist aus einem Kunststoffrohstoff eine Kunststoffformmasse mit den bestmöglichen Eigenschaften für die Verarbeitung und Anwendung bereitzustellen. Die Aufgaben der Compoundierung sind dabei einmal die Änderung der Teilchengröße, Einarbeitung von Additiven, Entfernung von unerwünschten Bestandteilen.

Durch das Compoundieren wird letztendlich ein Ausgangsbiowerkstoff hergestellt, der einerseits die einzelnen Ausgangsbestandteile enthält, also Schalenmaterial, Polypropylen, Additive etc., und zwar in gemischter Form. Regelmäßig wird das compoundierte Biowerkstoffprodukt als Zwischenprodukt in Form eines Pellet oder dergleichen produziert, so dass es in einer Kunststoffverarbeitungsmaschine dann zur Herstellung des gewünschten Kunststoffprodukts weiter zu verarbeiten ist, z.B. in einer Spitzgussmaschine.

Mittels der Erfindung gelingt es, ein Nebenprodukt der Sonnenblumenverarbeitung mit Kunststoff zu vereinen und somit ressourcenschonend und nachhaltig die Abhängigkeit der Kunststoffherstellung vom Rohöl um 30% bis 70% zu reduzieren.

Damit einhergehend beeinflusst die Verarbeitung des erfindungsgemäßen Biokomposits bzw. Biowerkstoffs auch den CO₂ Haushalt und auch die Ökobilanz der daraus hergestellten Produkte sehr positiv.

Es ist mittels der Erfindung auch möglich, die Verarbeitung des erfindungsgemäßen Biowerkstoffs - welchen man auch als Biopolymer bezeichnen kann - von bis zu 300° C zu realisieren (erste Tests haben dies ergeben) und einen mit signifikant verbesserten mechanischen Eigenschaften neuen Biowerkstoff (Biopolymer) zu einem akzeptablen Preis anzubieten.

Vor allem kann der erfindungsgemäße Biowerkstoff (Biopolymer) in allen Produktsegmenten eingesetzt werden und dabei können vorhandene Werkzeuge problemlos für die Verarbeitung eingesetzt werden.

Das Ziel der Erfindung, einen Biowerkstoff (Biopolymer) zu entwickeln, der einen sehr hohen Biofüllgrad hat und sich als technischer Biokunststoff trotzdem problemlos verarbeiten lässt, wird überzeugend erreicht. Schließlich ist es auch möglich, statt der beschriebenen Kunststoffe (PP, PE, ABS, PVC (Polyvinylchlorid), PS (Polystyrol)) auch ein Polylactid (Polymilchsäure) (kurz PLA) mit den Kunststoffschalen (deren Mehl) zu versetzen bzw. zu compoundieren. Damit wird der biologischen Anteil des gesamten Kunststoffs nochmals erhöht. PLA-Kunststoffe als solche sind bereits bekannt und sind regelmäßig aus vielen, chemisch aneinander gebundenen Milchsäuremolekülen aufgebaut und gehören zu den Polyestern. Polylactid (PLA)- Kunststoffe sind biokompatibel.

Der erfindungsgemäße Biowerkstoff kann für die Herstellung ganz verschiedenartiger Produkte verwendet werden, zum Beispiel für die Herstellung einer Verpackung (Nahrungsmittelverpackung), eines Autoteils (z. B. Verkleidung des Radkastens), für Mobiliar (Tische, Stühle, Bänke), Terrassendielen oder Türen und dergleichen. Auch kann der erfindungsgemäße Biowerkstoff dazu verwendet werden, Körbe oder Behälter, insbesondere solche, die in der Nahrungsmittelindustrie verwendet werden, herzustellen.

## Patentansprüche

1. Biowerkstoff bzw. Biokomposit auf Basis von Sonnenblumenkernschalen/- hülsen,
wobei der Fettanteil der Sonnenblumenschalen/-hülsen maximal 4% beträgt
und
wobei die Korngröße der Sonnenblumenschalen/-hülsen im Bereich von 0,01 bis 0,5 mm liegt.

2. Biowerkstoff bzw. Biokomposit nach Anspruch 1,
wobei der Anteil der Sonnenblumenkernschalen/- hülsen in dem Biowerkstoffendprodukt 40 bis 90%, vorzugsweise 50 bis 70% beträgt.

3. Biowerkstoff bzw. Biokomposit nach einem der vorhergehenden Ansprüche, **dadurch gekennzeichnet, dass** die Sonnenblumenschalen/-hülsen einen Wassergehalt zwischen 1 und 10%, vorzugsweise zwischen 4 bis 8%, besonders vorteilhaft zwischen 5 und 7% aufweisen und/oder die Korngröße der Sonnenblumenschalen/-hülsen im Bereich von 0,1 bis 0,3 mm liegt und/oder der Fettanteil der Schalen zwischen 1 und 2% beträgt.

4. Biowerkstoff bzw. Biokomposit nach einem der vorhergehenden Ansprüche, **dadurch gekennzeichnet, dass** die Sonnenblumenschalen/-hülsen mit dem Kunststoffmaterial compoundiert werden (sind).

5. Verwendung eines SPC (Sunflower-Plastic-Composites) gemäß Anspruch 1 zur Herstellung einer Verpackung oder eines Möbels oder von Türen oder Terrassendielen oder eines Autoteils.

6. Verwendung eines SPC (Sunflower-Plastic-Composites) nach Anspruch 5,
wobei die Verpackung vorzugsweise eine Nahrungsmittelverpackung, eine Dose oder eine Flasche für Sonnenblumenöl ist.

7. Verfahren zur Herstellung eines SPC gemäß Anspruch 1 unter Verwendung von Sonnenblumenkernschalen/- hülsen, insbesondere gemahlenen Sonnenblumenkernschalen/- hülsen mittels Extrusion oder Spritzgießen oder Rotationsguss oder Presstechniken oder Thermoformverfahren,
wobei als Kunststoffmaterial Polypropylen (PP) und /oder Polyethylen (PE) und/oder Polyvinylchlorid (PVC) und/oder ABS und/oder PLA und/oder PS (Polystyrol) eingesetzt wird.

8. Verfahren gemäß Anspruch 7 zur Herstellung eines Sunflower-Plastic-Composites unter Verwendung von Sonnenblumenkernschalen/-hülsen,
**dadurch gekennzeichnet, dass** das Sonnenblumenkernschalen-/-hülsenmaterial zumindest mit dem Kunststoffmaterial compoundiert wird und das compoundierte Material mittels Extrusion oder Spritzgießen oder Rotationsguss oder Presstechniken oder Thermoformverfahren oder Tiefziehverfahren oder dergleichen zu dem gewünschten Kunststoffprodukt verarbeitet wird.

## Claims

1. Biomaterial or biocomposite based on sunflower seed shells/husks,
where the fat content of the sunflower seed shells/husks is at most 4%
and
where the grain size of the sunflower seed shells/husks is in the range from 0.01 to 0.5 mm.

2. Biomaterial or biocomposite according to Claim 1,
where the proportion of the sunflower seed shells/husks in the final biomaterial product is from 40 to 90%, preferably from 50 to 70%.

3. Biomaterial or biocomposite according to any of the preceding claims,
**characterized in that** the water content of the sunflower shells/husks is from 1 to 10%, preferably from 4 to 8%, particularly advantageously from 5 to 7%, and/or the grain size of the sunflower shells/husks is in the range from 0.1 to 0.3 mm, and/or the fat content of the shells is from 1 to 2%.

4. Biomaterial or biocomposite according to any of the preceding claims,
**characterized in that** the sunflower shells/husks are (have been) compounded with the plastics material.

5. Use of an SPC (sunflower-plastic composite) according to Claim 1 for the production of packaging or of an item of furniture, or of doors, or of decking, or of an automobile part.

6. Use of an SPC (sunflower-plastic composite) according to Claim 5,
where the packaging is preferably food packaging, a jar or a bottle for sunflower oil.

7. Process for the production of an SPC according to Claim 1 with use of sunflower seed shells/husks, in particular of ground sunflower seed shells/husks by means of extrusion or injection molding or rotomolding, or press techniques, or thermoforming processes,
where plastics material used comprises polypropylene (PP) and/or polyethylene (PE) and/or polyvinyl chloride (PVC) and/or ABS and/or PLA and/or PS (polystyrene).

8. Process according to Claim 7 for the production of a sunflower-plastic composite with use of sunflower seed shells/husks,
**characterized in that** the sunflower seed shells/husks material is at least compounded with the plastics material, and the compounded material is processed to give the desired plastics product by means of extrusion or injection molding or rotomolding or press techniques or thermoforming processes or deep-drawing processes or the like.

## Revendications

1. Biomatériau ou biocomposite à base de coques/d'écorces de graines de tournesol, dans lequel la teneur en lipides des coques/écorces de graines de tournesol est au maximum de 4 % et
dans lequel la taille des particules des coques/écorces de graines de tournesol étant située dans la plage allant de 0,01 à 0,5 mm.

2. Biomatériau ou biocomposite selon la revendication 1,
dans lequel la proportion des coques/écorces de graines de tournesol dans le produit fini en biomatériau va de 40 à 90 %, de préférence de 50 à 70 %.

3. Biomatériau ou biocomposite selon l'une quelconque des revendications précédentes,
**caractérisé en ce que** les coques/écorces de graines de tournesol présentent une teneur en eau comprise entre 1 et 10 %, de préférence comprise entre 4 et 8 %, de manière particulièrement avantageuse comprise entre 5 et 7 %, et/ou en ce que la taille des particules des coques/écorces de graines de tournesol est située dans la plage allant de 0,1 à 0,3 mm, et/ou **en ce que** la teneur en lipides des coques est comprise entre 1 et 2 %.

4. Biomatériau ou biocomposite selon l'une quelconque des revendications précédentes,
**caractérisé en ce que** les coques/écorces de graines de tournesol sont soumises à un mélange (sont mélangées) avec le matériau de synthèse.

5. Utilisation d'un SPC (Sunflower-Plastic-Composite) selon la revendication 1 servant à fabriquer un emballage ou un meuble ou des portes ou des lames de terrasse ou une pièce auto.

6. Utilisation d'un SPC (Sunflower-Plastic-Composite) selon la revendication 5,
dans laquelle l'emballage est de préférence un emballage pour denrée alimentaire, une cannette ou une bouteille pour de l'huile de tournesol.

7. Procédé servant à fabriquer un SPC selon la revendication 1 en utilisant des coques/écorces de graines de tournesol, en particulier des coques/écorces de graines de tournesol moulues au moyen de l'extrusion ou du moulage par injection ou du moulage par rotation ou de techniques de pressage ou de procédés de thermoformage,
dans lequel du polypropylène (PP) et/ou du polyéthylène (PE) et/ou du chlorure de polyvinyle (PVC) et/ou de l'acrylonitrile-butadiène-styrène (ABS) et/ou de l'acide polylactique (PLA) et/ou du polystyrène (PS) sont utilisés en tant que matériau de synthèse.

8. Procédé selon la revendication 7
servant à fabriquer un SPC en utilisant des coques/écorces de graines de tournesol,
**caractérisé en ce que** le matériau de coques/écorces de graines de tournesol est soumis à un mélange au moins avec le matériau de synthèse, et **en ce que** le matériau mélangé est transformé en le produit de synthèse souhaité au moyen de l'extrusion ou du moulage par injection ou du moulage par rotation ou de techniques de pressage ou de procédés de thermoformage ou de procédés d'emboutissage ou similaires.
